Europäisches Patentamt

European Patent Office

Office européen des brevets

(11) Veröffentlichungsnummer: **0 365 700**
**A1**

# EUROPÄISCHE PATENTANMELDUNG

(21) Anmeldenummer: **88117799.2**

(22) Anmeldetag: **26.10.88**

(51) Int. Cl.⁵: **B60V 3/06**

(43) Veröffentlichungstag der Anmeldung:
**02.05.90 Patentblatt 90/18**

(84) Benannte Vertragsstaaten:
**BE DE ES FR GB IT NL SE**

(71) Anmelder: **MTG Marinetechnik GmbH**
**Wandsbeker Königstrasse 62**
**D-2000 Hamburg 70(DE)**

(72) Erfinder: **Reischauer, Hans-Jörg, Dipl.-Ing.**
**Schlossstrasse 84**
**D-2000 Hamburg 70(DE)**

(74) Vertreter: **Dipl.-Ing. H. Hauck Dipl.-Ing. E.**
**Graalfs Dipl.-Ing. W. Wehnert Dr.-Ing. W.**
**Döring**
**Neuer Wall 41**
**D-2000 Hamburg 36(DE)**

(54) ` **Seitenwandluftkissenfahrzeug.**

(57) Seitenwandluftkissenfahrzeug mit zwei parallelen Rümpfen, die mit einer festen Struktur über der Wasseroberfläche miteinander verbunden sind, mit je einer flexiblen Schürze im Vorschiff und Hinterschiff, mindestens einem Gebläse zur Erzeugung eines Luftstroms zur Füllung der Luftkissen zwischen den beiden Rümpfen, der Bug- und Heckschürze und der festen Struktur, die die beiden Rümpfe verbindet und mit Luftablaßklappen zur Minderung des Luftkissendrucks, wobei der Luftkissenraum zwischen Bug- und Heckschürze etwa auf halber Länge durch eine querverlaufende Trennvorrichtung unterteilt ist, welche die so gebildeten Abteile auch bei einem Differenzdruck zwischen den Abteilen annähernd druckdicht voneinander trennt und jedes Abteil mindestens ein Gebläse und mindestens eine Luftablaßklappe oder dergleichen zur Minderung des Luftkissendrucks aufweist.

Fig. 1

Fig 1

## Seitenwandluftkissenfahrzeug

Die Erfindung bezieht sich auf ein Seitenwandluftkissenfahrzeug (surface effect ships, SES) nach dem Oberbegriff des Patentanspruchs 1.

Ein derartiges Luftkissenfahrzeug ist z.B. aus der US-PS 4 133 282 bekannt geworden. Es hat zwei Rümpfe, die mit einer festen Struktur über der Wasseroberfläche miteinander verbunden sind. Im Vor- und Hinterschiff befindet sich je eine flexible Schürze, die verhindert, daß die von oben aus mindestens einem Gebläse eingeblasene Luft entweichen kann. Das Fahrzeug wird so vom Luftkissen angehoben, bis es mit den Innenteilen der Rümpfe kaum noch in das Wasser eintaucht. Damit bietet es einen erheblich verminderten Widerstand im Wasser, was die Erzielung hoher Geschwindig-keiten mit verhältnismäßig geringer Antriebslei-stung erlaubt. Dieser Vorteil wird bei bestimmten Seegängen von vorn durch Erregung heftiger Bewegungen des Fahrzeugs verringert, zumal durch die Bewegungen ein erheblicher Teil der Luft aus dem Luftkissen nach allen Seiten entweichen kann. Obgleich Luftkissenfahrzeuge von ihrem Luftkissen über der Wasseroberfläche in der Schwebe gehalten werden, haben sie dennoch nicht grundsätzlich ein besseres Seegangsverhalten als Einrumpffahrzeuge. Die Unebenheiten der Wasseroberfläche werden über das Luftkissen kaum gedämpft auf den Bootskörper übertragen. Seitenwandluftkissenfahrzeuge verhalten sich im Seegang ähnlich wie Doppelrumpffahrzeuge (Katamarane). Ihre Stampfwinkel (Neigung um die horizontale Querachse) und Tauchbewegungen können in bestimmten Seegängen beträchtlich sein.

Bei dem bekannten Luftkissenfahrzeug nach der US-PS 4 133 282 können die Schürzen mit Hilfe von Verstellzylindern verstellt, z.B. angehoben werden. Ferner ist aus dieser Druckschrift bekannt, nahe der Bugschürze eine weitere parallele steife Bugschürze vorzusehen, die zur Stabilisierung von Stampfbewegungen dient. Dem zwischen den Bugschürzen angeordneten Teil kann ein Gebläse zugeordnet werden, das, z.B. im Gegentakt zur Stampfbewegung eine Druckbeaufschlagung vorsieht. Wegen der steifen Ausführung der zweiten Bugschürze kann eine Druckdifferenz zwischen dem vorderen und dem hinteren Abteil in beiden Richtungen zugelassen werden. Konventionelle flexible Schürzen, wie sie üblicherweise bei Luftkissenfahrzeugen verwendet werden und die einen erheblich geringeren Fahrtwiderstand verursachen, lassen hingegen einen Überdruck zum Ausgleich der Stampfbewegungen nur in eine Richtung zu.

Der Erfindung liegt die Aufgabe zugrunde, ein Seitenwandluftkissenfahrzeug zu schaffen, bei dem die Stampf- und Tauchbewegungen im Seegang wirksam gedämpft werden können, und zwar auch auf passive Weise, d.h. ohne aktive Steuerung des Drucks im Luftkissen.

Diese Aufgabe wird erfindungsgemäß durch die Merkmale des Kennzeichnungsteils des Patentanspruchs 1 gelöst.

Beim erfindungsgemäßen Luftkissenfahrzeug ist der Luftkissenraum zwischen Bug- und Heckschürze etwa auf halber Länge durch eine quer verlaufende Trennvorrichtung unterteilt. Sie ist so ausgeführt, daß sie auch beim Differenzdruck zwischen den Abteilen diese annähernd druckdicht voneinander trennt, wobei jedem Abteil mindestens ein Gebläse zur Herstellung und Aufrechterhaltung des Luftkissens und mindestens eine Luftablaßklappe oder dergleichen zur Minderung des Luftkis-sendrucks zugeordnet ist. Vorzugsweise ist nach einer Ausgestaltung der Erfindung die Trennvorrichtung so ausgeführt, daß bei annähernd gleichem Druck in den Abteilen diese relativ weich und flexibel ist, jedoch bei einer Druckdifferenz relativ steif wird.

Mit Hilfe einer derartigen Trennvorrichtung eröffnet sich die Möglichkeit, die Stampfbewegungen des Schiffes im Seegang durch Druckdifferenzen in den Luftkisseninnenabteilen zu beeinflussen. Dies kann z.B. in passiver Weise erfolgen, indem die durch Vertikalbewegungen des Fahrzeugs und durch Wellenbewegung in denKissen erzeugten ("natürlichen") Druckdifferenzen die Stampfbewegungen dämpfen. Bei Abwärtsbewegung des Vorschiffs wird ein Überdruck im vorderen Abteil und bei einer Aufwärtsbewegung des Vorschiffs ein Unterdruck im vorderen Teil ausgebildet.

Eine noch erfolgversprechendere Wirkungsweise ist durch aktiv geregelte ("künstliche") Druckdifferenzen zwischen dem vorderen und dem hinteren Abteil zu erreichen. Nach einer Ausgestaltung der Erfindung ist die Vertikalgeschwindigkeit oder die Vertikalbeschleunigung des Vorschiffs oder eine andere von der Bewegung des Vorschiffs abhängige Größe oder die abgetastete Wellenkontur die Regelgröße für den Luftdruck in den Abteilen. Zum Beispiel kann mit Hilfe geeigneter Sensoren die Bewegung des Schiffs im Seegang registriert wer-den. Durch willkürlich hervorgerufene Druckerhö-hung und Druckentlastung kann im Gegentakt zu den Stampfbewegungen eine aktiv gesteuerte Dämpfung hervorgerufen werden. Die Ausführungsform, bei der bei annähernd Druckgleichheit in den Abteilen die Trennvorrichtung relativ flexibel wird, hat den Vorteil, daß der durch die Trennvorrichtung hervorgerufene Fahrtwiderstand weitaus geringer ist als bei einer ständig starren Unterteilung.

Es sind verschiedene Konstruktionen denkbar, die ein Steifwerden der Trennvorrichtung bei einer Druckdifferenz bewirken, bei einem Wegfall der Druckdifferenz indessen relativ weich und flexibel werden. Eine besteht nach einer Ausgestaltung der Erfindung darin, daß die Trennvorrichtung von einer im Querschnitt mäander- oder schlingenförmig verlaufenden Trennschürze aus flexiblem Material gebildet ist dergestalt, daß bei einem Differenzdruck an der Trennschürze genachbarte Abschnitte zumindest teilweise gegeneinander gepreßt werden. Bei einer derartigen Konstruktion sind annähernd vertikal verlaufende parallele Finger vorgesehen, wie dies an sich für Schürzen, insbesondere Bugschürzen, bekannt ist. Erfindungswesentlich ist jedoch, daß die Finger abwechselnd sowohl nach vorn als auch nach achtern weisen und nach vorn und achtern offene Zwischenräume bilden, die von benachbarten, annähernd in Längsrichtung verlaufenden Abschnitten der Trennschürze gebildet sind. Bei einer entsprechenden Druckbeaufschlagung, d.h. entsprechendem Differenzdruck, werden die Wände auseinandergepreßt und gegen benachbarte Wände ange-preßt, so daß sich eine zwischen den Abteilen relativ starre Trennkonstruktion ergibt, die auch größeren Differenzdrücken standhalten kann, und zwar unabhängig vom Vorzeichen des jeweiligen Differenzdrucks.

Die Trennschürze nach der Erfindung hat von der Seite betrachtet eine annähernd dreieckige Kontur mit nach unten weisender Spitze. Sie ermöglicht daher ein Abgleiten des Wassers auch im versteiften Zustand und erst recht im entspannten Zustand.

Damit der Wasserwiderstand bei Vorausfahrt und bei Überdruck in der vorderen Luftkissenkammer nicht zu stark ansteigt, ist nach einer Ausgestaltung der Erfindung eine Vorschürze aus flexiblem Material an der Vorderseite der Trennschürze, diese teilweise überlappend, so angebracht, daß sie die Wasserströmung nach unten ableitet, die druckbedingten Bewegungen der Trennschürze jedoch nicht behindert. Die Vorschürze darf jedoch nicht die gesamte Fläche der Trennschürze überlappen, da anderenfalls beim Überdruck in der vorderen Luftkissenkammer das gewünschte Steifwerden der Schürze nicht erzielt wird.

Die Erfindung wird nachfolgend anhand von Zeichnungen näher erläutert.

Fig. 1 zeigt einen Längsschnitt durch ein schematisch dargestelltes Seitenwandluftkissenfahrzeug nach der Erfindung.

Fig. 2 zeigt eine Trennschürze des Luftkissenfahrzeuges nach Fig. 1.

Fig. 3 zeigt einen Schnitt durch die Darstellung nach Fig. 1 entlang der Linie 3-3.

Fig. 4 zeigt einen Schnitt durch die Darstellung nach Fig. 3 entlang der Linie 4-4.

Fig. 5 zeigt den rechten Teil der Trennschürze nach Fig. 4 bei einem Überdruck von hinten.

Fig. 6 zeigt den rechten Teil der Trennschürze nach Fig. 4 bei einem Überdruck von vorn.

Fig. 7 zeigt einen Schnitt durch die Darstellung nach Fig. 3 entlang der Linie 7-7.

Fig. 8 zeigt einen Schnitt durch die Darstellung nach Fig. 3 entlang der Linie 8-8.

Fig. 9 zeigt eine Seitenansicht der Schürze nach Fig. 3.

Bevor auf die in den Zeichnungen dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung sein kann.

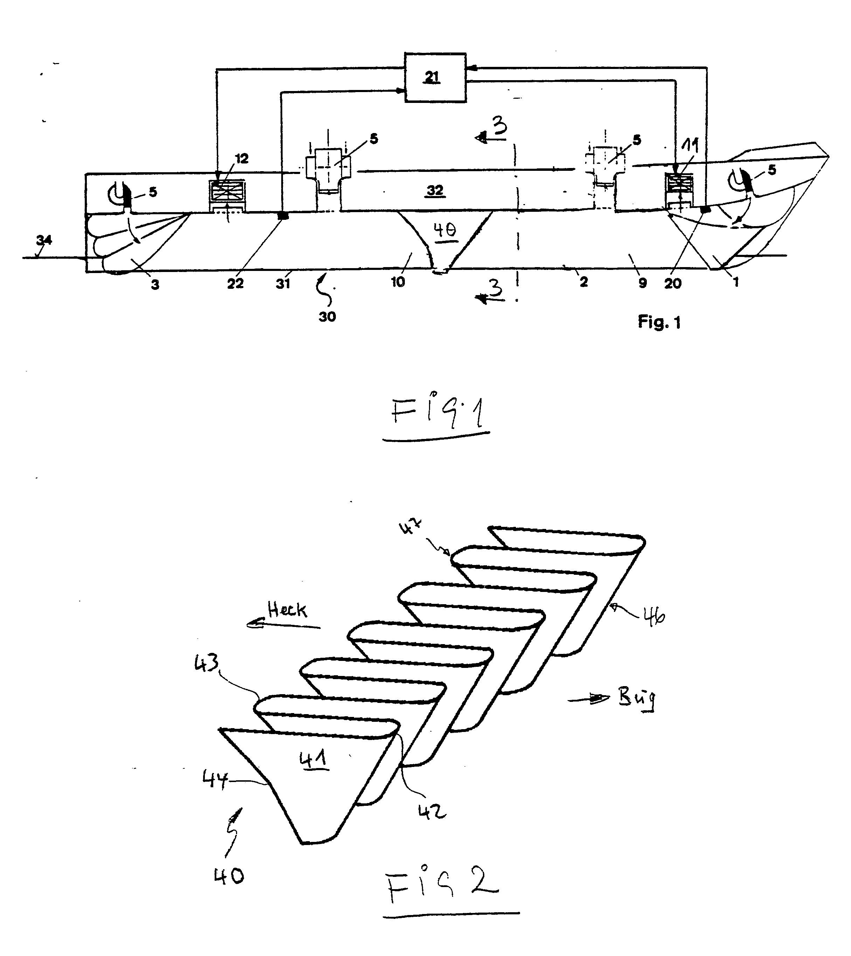

Das in den Zeichnungen dargestellte Seitenwandluftkissenfahrzeug 30 ist herkömmlichen Aufbaus. Es weist zwei Seitenwände auf, von denen in Fig. 1 eine bei 31 zu erkennen ist. Die Seitenwände sind durch eine feste Struktur 32 über der Wasseroberfläche 34 miteinander verbunden. Am Bug befindet sich eine Bugschürze 1. Sie kann herkömmlichen Aufbaus sein in Form von schräg abwärts gerichteten Fingern aus flexiblem Material. In drucklosen Zustand ist sie schlaff. Bei einem Druck von hinten (aus dem Luftkissen) wird sie hingegen prall. Am Heck befindet sich eine Heckschürze 3, die ebenfalls von herkömmlichem Aufbau sein kann. Annähernd auf der halben Länge des Fahrzeugs 30 ist eine Trennschürze 40 angeordnet, auf deren Aufbau und Wirkungsweise weiter unten eingegangen wird. Durch die Schürzen 1, 3 und 40 wird der Luftraum unter halb der festen Struktur 32 in einen vorderen Raum 9 zwischen Bugschürze 1 und Trennschürze 40 und einen hinteren Raum 10 zwischen Trennschürze 10 und Heckschürze unterteilt. Dem vorderen Raum 9 und dem hinteren Raum 10 ist jeweils eine steuerbare Luftablaßklappenanordnung 11, 12 zugeordnet. Der Bugschürze 1 und der Heckschürze 3 sind Lüfter 5 zugeordnet. Außerdem sind Lüfter 5 für den Raum 9 bzw. 10 vorgesehen.

Eine Steuer- und Regelvorrichtung 21 ist lediglich als Block dargestellt. Sie dient der Einstellung der Steuerklappen in der Luftablaßklappenanordnung 11 und 12 sowie der Lüfter (was indessen nicht gezeigt ist). Dem vorderen Raum 9 ist ein Sensor 20 und dem hinteren Raum 10 ein Sensor 22 zugeordnet, welche z.B. die vertikale Geschwindigkeit oder die vertikale Beschleunigung des Schiffes in diesem Bereich mißt. Es kann jedoch auch eine andere die Bewegung des Vorschiffs verkörpernde Größe gemessen werden, z.B. den Druck in den Räumen 9, 10. Schließlich kann auch die Wellenkontur gemessen werden.

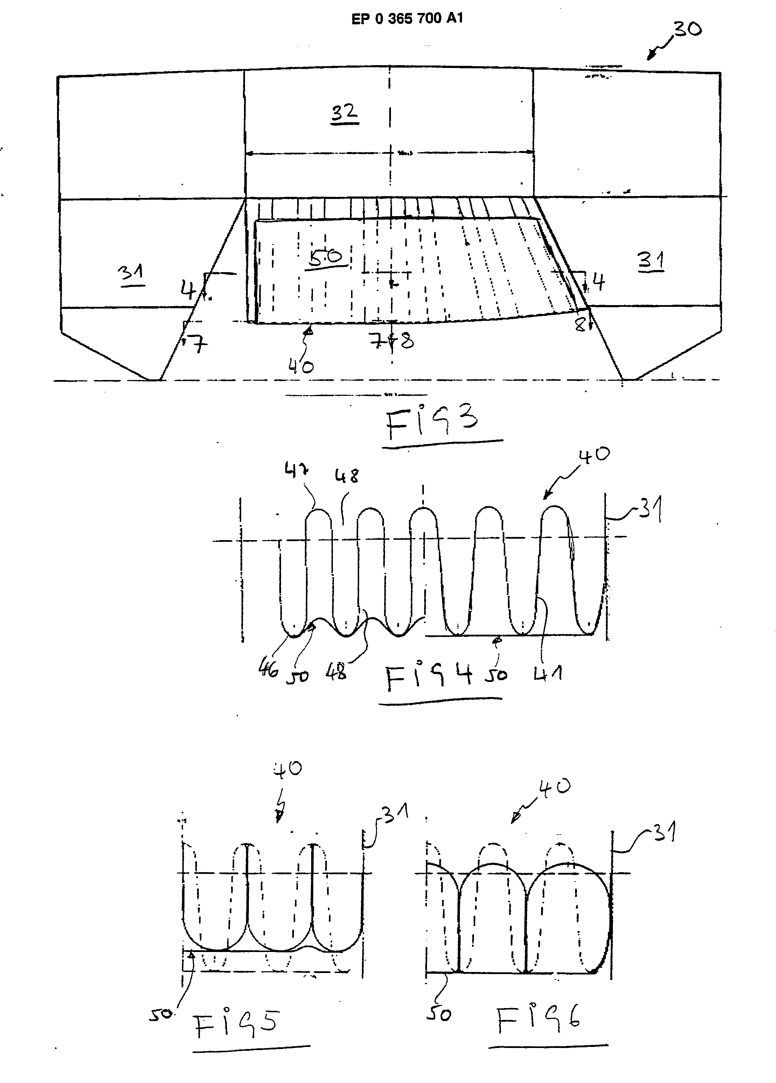

In Fig. 2 ist für sich allein perspektivisch die Trennschürze 40 dargestellt. Sie besteht aus einem flexiblen Flachmaterial, das schlingen- oder mäanderartig geformt ist, wobei ebene in Längsrichtung des Schiffes verlaufende Abschnitte 41 über halbkreisförmig gekrümmte vordere Abschnitte 42 bzw. hintere Abschnitte 43 verbunden sind. Die vertikal angeordneten Abschnitte 41 haben eine annähernd dreieckförmige Kontur mit einer nach unten weisenden Spitze. Die vordere Kante des Dreiecks ist schräg nach hinten und unten verlaufend, während die hintere Kante mit einem Knick 44 entgegengesetzt verläuft. Die nach unten weisende Spitze des Dreiecks ist abgeschnitten, so daß sich eine annähernd waagerechte gerade Kante 45 ergibt (siehe auch Fig. 9).

Bei dem gezeigten Aufbau der Trennschürze 40 sind z.B. sechs nach vorn weisende Finger 46 und z.B. fünf nach hinten weisende Finger 47 geformt, aus denen die Zwischenräume 48 gebildet werden. Mit den nach vorne weisenden Fingern 46 ist eine Vorderschürze 50 aus flexiblem Material verbunden, vorzugsweise mit den vordersten Kanten der Finger. Wie aus Fig. 3 zu erkennen, erstreckt sie sich nach oben nicht ganz bis zur Mittelstruktur 32. Durch den verbleibenden Spalt wird die Trennschürze 40 vom Überdruck des vorderen Teilkissens, Raum 9, aufgeblasen. Die Vorderschürze 50 ist so mit der Trennschürze 40 verbunden, daß ein harmonikaartiges Zusammenschieben bzw. Auseinanderziehen zugelassen ist, siehe auch Fig. 4: In der linken Hälfte ist dargestellt, wie die Schürze 40 und die Vorschürze 50 frei herabhängen. In der rechten Hälfte sind die beiden Schürzen so weit auseinandergezogen, daß der äußere Finger bis zur Seitenwand 31 reicht und gleichzeitig die Vorschürze straffgezogen wird.

Zur Verbesserung der Dichtigkeit zwischen den beiden Teilkammer 9 und 10 empfiehlt es sich, die Schürzen seitlich zu befestigen (auf beiden Seiten).

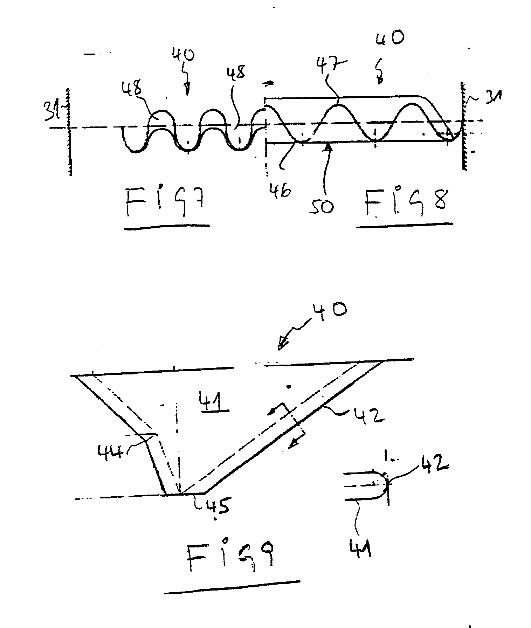

Solange der Druck in beiden Kammern 9, 10 gleich groß ist, ist die Trennschürze 40 weich und nachgiebig. Sie kann sich somit auch der Höhe des Wasserspiegels im Luftkissen anpassen. Dies ist wichtig, da eine steife ins Wasser hineinragende quergestellte Konstruktion einen deutlich Anstieg des Wasserwiderstands, insbesondere bei hohen Geschwindigkeiten, zur Folge haben würde. Bei einer Druckdifferenz zwischen der vorderen und der hinteren Kammer wird die Trennschürze 40 aufgeblasen, und zwar in einer Weise, wie es in den Figuren 5 und 6 dargestellt ist. Ist der Druck in der hinteren Kammer 10 größer als in der vorderen Kammer, wird der Raum zwischen den nach hinten weisenden Fingern 47 aufgeblasen, so daß die Wandabschnitte 41 paarweise gegeneinandergepreßt werden (Fig. 5). Im umgekehrten Fall erfolgt ebenfalls ein Aneinanderpressen der Wandabschnitte 41, jedoch in anderer Paarung und wobei jedoch die zwischen den nach vorn weisenden Fingern 46 gebildeten Zwischenräume aufgeblasen werden. Die Vorderschürze 50 schließt diese Räume zum großen Teil ab, so daß der Wasserwiderstand verringert wird, indem die Wasserströmung nach unten abgeleitet wird. Wie erkennbar, ergibt sich für die beiden möglichen Richtungen des Überdrucks jeweils eine stabile Struktur der Trennschürze 40, so daß auch bei größeren Druckdifferenzen ein Druckausgleich verhindert ist.

Eine passive Beeinflussung der Bewegung des Fahrzeugs im Seegang erfolgt durch unterschiedliche Druckbildung in den Räumen 9 und 10 aufgrund der Wellenkontur der Wasseroberfläche (welche gleichzeitig die Unterseite des Luftkissens bildet), sowie aufgrund der Auf- und Abwärtsbewegung des Vorschiffs bzw. des Achterschiffs. Bewegt sich das Vorschiff abwärts, wird in der Kammer 9 ein Überdruck erzeugt und bei einer Aufwärtsbewegung ein Unterdruck. Um eine noch effektivere Wirkungsweise zu erhalten, kann mit Hilfe der Sensoren 20, 22 die Bewegung des Schiffs im Seegang registriert werden. Die Sensoren steuern über die Lüfter 5 und die Ablaßklappenanordnung 11, 12 die Druckerhöhung bzw. Druckentlastung in den Kammern 9 und 10 im Gegentakt zu den Stampfbewegungen.

Der Knick 44 bildet eine Sollknickstelle. Bei Fahrt im Seegang paßt sich die Schürze dadurch besser der jeweiligen Wellenkontur an, indem die Hinterkante 43 an der vorgegebenen Stelle einknickt.

**Ansprüche**

1. Seitenwandluftkissenfahrzeug mit zwei parallelen Rümpfen, die mit einer festen Struktur über der Wasseroberfläche miteinander verbunden sind, mit je einer flexiblen Schürze im Vorschiff und Hinterschiff, mindestens einem Gebläse zur Erzeugung eines Luftstroms zur Füllung der Luftkissen zwischen den beiden Rümpfen, der Bug- und Heckschürze und der festen Struktur, die die beiden Rümpfe verbindet und mit Luftablaßklappen zur Minderung des Luftkissendrucks, dadurch gekennzeichnet, daß der Luftkissenraum zwischen Bug- und Heckschürze (1, 3) etwa auf halber Länge durch eine querverlaufende Trennvorrichtung (40) unterteilt ist, welche die so gebildeten Abteile (9, 10) auch bei einem Differenzdruck zwischen den Abteilen (9, 10) annähernd druckdicht voneinander trennt und jedes Abteil (9, 10) mindestens ein Gebläse (5) und mindestens eine Luftablaßklappe (11, 12) oder dergleichen zur Minderung des Luftkissendrucks aufweist.

2. Fahrzeug nach Anspruch 2, dadurch gekennzeichnet, daß die Trennvorrichtung (40) bei annähernd gleichem Druck in den Abteilen (9, 10) relativ weich und flexibel ist, jedoch bei einer Druckdifferenz relativ steif ist.

3. Fahrzeug nach Anspruch 1 oder 2, dadurch gekennzeichnet, daß die Vertikalgeschwindigkeit oder die Vertikalbeschleunigung eines Schiffsabschnitts oder eine andere von der Bewegung eines Schiffsabschnitts abhängige Größe oder die abgetastete Wellenkontur die Regelgröße für den Luftdruck im Luftkissen zwischen den Abteilen (9, 10) bildet.

4. Fahrzeug nach einem der Ansprüche 1 bis 3, dadurch gekennzeichnet, daß die Trennvorrichtung von einer im Querschnitt mäander- oder schlingenförmig verlaufenden Trennschürze (40) aus flexiblem Material gebildet ist dergestalt, daß bei einem Differenzdruck an der Trennschürze (40) benachbarte Abschnitte (41) paarweise gegeneinander gepreßt werden.

5. Fahrzeug nach Anspruch 4, gekennzeichnet durch im Querschnitt gekrümmte Abschnitte (42,43) nach vorn und hinten und dazwischen verlaufende annähernd ebene Abschnitte (41).

6. Fahrzeug nach Anspruch 4 oder 5, dadurch gekennzeichnet, daß die jeweils einander benachbarten, annähernd in Längsrichtung verlaufenden Abschnitte (41) der Schürze (40) eine näherungsweise dreieckförmige Kontur aufweisen,deren Spitze nach unten zeigt.

7. Fahrzeug nach einem der Ansprüche 4 bis 6, dadurch gekennzeichnet, daß eine Vorschürze (50) aus flexiblem Material an der Vorderseite der Trennschürze (40), diese teilweise überdeckend, so angebracht ist, daß sie die Wasserströmung nach unten ableitet, die druckbedingten Bewegungen der Trennschürze (40) jedoch nicht behindert.

8. Fahrzeug nach einem der Ansprüche 4 bis 7, dadurch gekennzeichnet, daß die Hinterkante (43) der nach hinten weisenden Finger nicht gerade ausgeführt, sondern mit einer Sollknickstelle (44) ausgestattet ist.

**Fig. 1**

$F i g . 1$

Heck

Bug

$F i g 2$

30

32

31    4    31

50

4

7    7+8    8

40

## Fig3

42    48    40

31

46  50  48    Fig4    50    41

40    31

50    Fig5

40    31

50    Fig6

Fig 7      Fig 8

Fig 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 028 743 (MATTOX)<br>* Zusammenfassung * <br>--- | 1,2 | B 60 V 3/06 |
| A | GB-A-1 569 740 (MATTOX)<br>* Seite 1, Zeilen 48-63 *<br>--- | 1 | |
| A | FR-A-1 552 655 (BRITISH HOVERCRAFT CORP.)<br>* Seite 3, Zeilen 11-14 *<br>--- | 1 | |
| X | US-A-3 365 018 (BLISS)<br>* Insgesamt *<br>--- | 4-6 | |
| A | US-A-3 297 102 (COCKERELL)<br>* Spalte 6, Zeilen 16-34 *<br>----- | 4-6 | |

**RECHERCHIERTE SACHGEBIETE (Int. Cl.5)**

B 60 V

Der vorliegende Recherchenbericht wurde für alle Patentansprüche erstellt

| Recherchenort | Abschlußdatum der Recherche | Prüfer |
|---|---|---|
| DEN HAAG | 20-06-1989 | HAUGLUSTAINE H.P.M. |